(19) Europäisches Patentamt

European Patent Office

Office européen des brevets

(11) **EP 1 612 384 B1**

(12) **EUROPEAN PATENT SPECIFICATION**

(45) Date of publication and mention
of the grant of the patent:
**18.10.2006 Bulletin 2006/42**

(51) Int Cl.:
*F01N 7/08* (2006.01)     *F01N 1/06* (2006.01)
*F02B 27/06* (2006.01)

(21) Application number: **04015585.5**

(22) Date of filing: **02.07.2004**

(54) **Muffler device**

Schalldämpfervorrichtung

Dispositif de silencieux

(84) Designated Contracting States:
**DE GB SE**

(43) Date of publication of application:
**04.01.2006 Bulletin 2006/01**

(73) Proprietor: **Ford Global Technologies, LLC.
Dearborn MI 48126 (US)**

(72) Inventor: **Saberi, Josef
5612 MG Eindhoven (NL)**

(74) Representative: **Bergquist, Kjell Gunnar
Albihns Göteborg AB,
Box 142
401 22 Göteborg (SE)**

(56) References cited:
**US-A- 3 414 078          US-A- 4 225 011
US-A1- 2002 083 703**

• **PATENT ABSTRACTS OF JAPAN vol. 0130, no. 77 (M-801), 22 February 1989 (1989-02-22) & JP 63 277813 A (HONDA MOTOR CO LTD), 15 November 1988 (1988-11-15)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The invention refers to a muffler device for installation within an exhaust pipe connected to an engine. The exhaust pipe has a cross-sectional inner area, and the muffler is arranged to shift a resonance frequency carried by engine exhaust gases passing through said exhaust pipe in a flow direction. The muffler device comprising an obstruction device placed within the exhaust pipe.

BACKGROUND ART

A passageway system or pipe system which is connected to a noise source, for example in exhaust system mounted to an internal combustion engine, is generally made up of a plurality of passageways or pipes together with one or more mufflers. From an acoustic point of view these parts make up one or more so called mass-spring systems, where each muffler acts as a spring and in which the air or the gas in the pipe acts as the mass. The spring stiffness is thus directly proportional to the square of the sound velocity for the gas medium which is present and inversely proportional to the volume of the muffler. The mass for respective passageway sections is directly proportional to the length of the passageway divided by its area.

For an exhaust system made up of a muffler and an inlet and outlet passageway a so-called system resonant frequency will arise. At this resonant frequency the so-called input damping is negative, i.e. sound pulses from, for example, exhaust valve openings exit the system as amplified sound.

For internal combustion engines in motor vehicles it is desired that this resonant frequency lies below the ignition frequency of the engine when idling. For a 4-cylinder engine with an idling speed of 750 rpm this means that a first resonant frequency of the system considerably below 25 Hz is sought. This low resonant frequency is possible to achieve with the help of a very large muffler and a moderate passageway length downstream of the muffler. Due to space considerations, vehicle design restricts the possibility of using a large muffler and so in practice it is advantageous to obtain low resonant frequency by placing the muffler well upstream in the system so that the length of the passageway downstream of the muffler can be increased by a sufficient amount.

With increased passageway length downstream of the muffler the risk increases that so-called standing sound waves of half the wave length (or multiples thereof) in frequency coincide with the ignition frequency of the engine or multiples thereof at various engine speeds.

With a pipe length of, for example, 1.4 m downstream of the muffler and normal exhaust temperatures of, with normal driving, around 200° C., strong resonances arise due to the so-called first standing wave (so-called "half lambda") at 160 Hz.

For a 5-cylinder engine the first standing wave coincides with the firing frequency at approximately 4000 rpm, with double ignition frequency at approximately 2000 rpm and trip ignition frequency at around 1300 rpm. This results in greatly increased noise amplification.

With higher exhaust temperatures, i.e. when the engine is under greater load, corresponding resonance amplification occurs at higher engine speeds. At full load when the exhaust gas temperature in the exhaust system's latter section often exceeds 700° C., the resonance amplification is delayed until almost double engine speed. The second so-called standing wave, i.e. when the full sound wave length coincides with 1.4 m pipe length, gives double resonant frequency 32 Hz. In other words resonance amplification during normal driving arises even at 8000 rpm with the ignition frequency, at 4000 rpm with the double ignition frequency and at 2600 rpm with the triple ignition frequency. These latter resonance amplifications of the ignition frequency and their multiples are generally somewhat milder.

In spite of the standing wave problem, it is desirable to use a long tail pipe due to the following reasons:

1. It is possible to use a smaller muffler in order to tune the Helmholtz resonator for lower resonance frequencies in the low and mid range number of revolutions.

2. Low weight due to the possibility to use smaller muffler volume, which has a positive effect on the fuel consumption.

3. Low cost due to the need for a smaller muffler volume.

4. Smaller packaging volumes due to the smaller muffler volume.

5. The possibility to use less number of hangers for the exhaust system due to a total decrease in weight due to the smaller muffler volume.

6. Better control of the exhaust system resonance, i.e. the mechanical vibrations.

In order to be able to use long pipes and to suppress the standing waves present in the long pipes, a sound suppressant device (muffler device) is a common device used in most types of internal combustion engines. For example, US 4966253 teaches a muffler device for reducing the noise level of an internal combustion engine as exhaust gases and sound waves produced by the operation of the engine are expelled into the atmosphere.

The device is placed in the exhaust system, being disposed within the exhaust pipe or pipes as close to the exhaust manifold as possible. The device has a sound chamber for attenuating sound waves entering the chamber by deflection of the sound waves back toward their source and a venturi for drawing exhaust gases through the device and expelling them to the atmosphere.

The sound chamber according to US 4966253 is defined by a generally cylindrical outer housing having opposite ends. In each end, a plurality of lengthwise cuts is made which extend axially approximately one-third of the length of the pipe. This forms a plurality of tab means extending axially from each end of the pipe. The cuts in the opposite ends of the outer pipe are offset slightly from one another so that a cut defining an edge of a tab on one end of the pipe is opposite the approximate center of a tab extending from the other end of the pipe. The tabs are then bent inwardly, with alternating tabs extending from from a single end of the being bent either slightly or radically inwardly. The radically inwardly bent tabs together form a perforated cover means for the chamber at each end thereof. The plurality of gaps in said cover means allow exhaust gases to pass into the chamber. The muffler device also comprises an inner pipe placed in the chamber and extending in the pipe direction, and held in place by two opposite collars held in place over the tabs by lips.

One problem with the muffler device according to US 4966253 is that the complex structure makes it expensive to manufacture. Another problem is that the device is not anchored in the pipe but relies on that the tail pipe has lesser diameter than the pipe upstream. The device is placed in the upstream pipe in the joint section between the pipe and the tail pipe. This construction disqualifies a free placing of the device in the exhaust system. Yet another problem is that the construction blocks the exhaust pipe and forces the exhaust gases to flow along a forced path giving rise to an undesirable pressure increase upstream the device.

DISCLOSURE OF INVENTION

The object of the invention is to find an improved passageway system or exhaust pipe system connected to a noise source, for example an exhaust system mounted to an internal combustion engine, where the problem with resonance frequencies in the exhaust system is rectified. The invention will be explained below in view of the above described prior art.

The muffler device is intended to be installed within the exhaust pipe having a cross-sectional inner area $A_1$. The muffler shall shift a resonance frequency carried by engine exhaust gases passing through said exhaust pipe in a flow direction. The muffler device comprises an obstruction device placed within the exhaust pipe. The invention is characterised in that the obstruction device has a projected area Ap being of such magnitude in relation to the inner area $A_1$ that the standing wave frequency for an open pipe is shifted into a standing wave frequency for a closed pipe.

The effect on the exhaust back pressure increase shall be as low as possible. However, the present invention aims to solve the Noice, Vibration, Harshness, (NVH) problem, of which the standing wave problem is a part, but the optimum dimension of the obstruction device in relation to NVH and the exhaust back pressure needs to be chosen. A theoretical upper limit for the projected area $A_p$ occurs when the obstruction has the same dimension as the pipe cross-section, i.e. a closed pipe, wherein the transmitted noise will be at a minimum but where the exhaust gas cannot pass the obstruction. In order to achieve an acceptable exhaust back pressure, the upper limit of the projected area Ap is 50% of the inner area $A_1$.

However, testing has showed a surprisingly good effect for minimising standing waves and still having an acceptable exhaust back pressure when the obstruction device has a projected area Ap of at lest 35 %, preferably from 35% to 40% of the inner area $A_1$.

The benefits of the invention lies in that the muffler device limits the noise level of the fuel burning engine as exhaust gases pass through the exhaust pipe and are expelled to the atmosphere, by shifting the standing wave frequency occurring in an open pipe to a standing wave frequency that should occur in the pipe should it be closed. The invention thus muffles and deflects sound waves generated by the engine as exhaust is produced and expelled, and allows exhaust gases to escape with minimal back pressure on the exhaust system.

In one embodiment of the invention the obstruction device comprises a rod-like element mounted in a cross-flow manner in the exhaust pipe. The obstruction device may be arranged such that the exhaust gases may pass on two sides of the obstruction device. One further advantage with the invention is its simplicity and that such a simple construction gives such a surprisingly good effect on the sound attenuation of standing waves together with a low back pressure.

The obstruction device is placed at a location being a node or an anti-node (low and high sound pressure locations).

Node refers to a position within the pipe where the standing wave has a minimum value, i.e. where the amplitudes from different waves give a zero sum for the standing wave.

The positions where the amplitude of vibration has a maximum value are called antinodes.

Here is one example of the invention:

The projected area Ap is about 42% of the inner area $A_1$.

The obstruction is placed such that its lower part coincide with a line dividing the exhaust pipe into two identical halves.

The obstruction is in the form of a pipe with a circular cross-section.

The inner diameter $D_p$ of the exhaust pipe is 60 mm.

The projected diameter $D_m$ of the obstruction is 20 mm.

The projected length $L_t$ of the obstruction is equal to $D_p$.

The mass flow of the exhaust gas is 530 Kg/h.

The temperature (T1) of the exhaust gas is 400°C.

The flow speed U = 100 m/s.

Reynolds number Re $\approx 1 \times 10^5$.

The density of the exhaust gas $\rho_0$ =

$$P = \rho \times R \times T \Rightarrow \frac{P0}{P1} = \frac{\rho 0}{\rho 1} \times \frac{T0}{T1} \Rightarrow \rho 1 = \frac{P1}{P0} \times \rho 0 \times \frac{T0}{T1}$$

P0 = 10310 Pa

T0 = 293 Kelvin (273 +20)

T1 = exhaust gas temperature in Kelvin (400+273)

P1 = Exhaust gas pressure at location of obstacle

$\zeta$ is the pressure loss coefficient (or Drag coefficient) and in this example for a pipe or rod with a circular cross-section. The pressure loss coefficient is a coefficient referring to the local flow resistance and is dependent on the shape of the obstruction and the Reynolds number. The coefficient is available in most Flow resistance hand books, for example: Welty, Wicks, Wilson, Fundamentals of Momentum, Heat and Mass Transfer, Third edition. ISBN 0-471-87497.

The back pressure $\Delta P$ is calculated by:

$$\Delta P = \zeta \times \rho \times \frac{U^2}{2} \, ;$$

and with the data in the example $\Delta P$ is about 1 KPa.

As can be seen from the above example, the pressure loss coefficient depends on the cross-section of the obstruction. As can be seen in prior art, obstructions with low pressure loss has a droplet shaped cross-section with the narrower tail downstream the flow path. However, such a cross-section is expensive to manufacture and has an effect only on the back pressure and has not an effect on the standing wave problem. Therefore, it is possible to use any form of obstruction device having a projected area $A_p$ large enough in relation to the pipe cross-sectional inner area $A_1$ to change the standing wave frequency of an open pipe to a standing wave frequency of a closed pipe. Thus, one benefit of the invention is that the obstruction device may be made from rod-like element, for example a simple pipe or pin with a circular cross-section, which is cheap and easy to manufacture. However, other suitable rod-like obstructions may have a cross-sectional geometry that is circular, oval, rectangular, droplet shaped, triangular, or any other suitable geometry.

In order to find the back pressure within the preferred range calculations may be done according to the above example, but with the data prevailing for that situation, i.e. with regard to the pressure loss coefficient etc.

BRIEF DESCRIPTION OF DRAWINGS

The invention will below be explained further in connection to a number of figures, where:

FIG. 1 is a partial cross-sectional side view of an exhaust system according to prior art;

FIG. 2 is a partial cross-sectional side view of a first exhaust system according to one embodiment of the invention;

FIG. 3 is a partial cross-sectional view taken along III-III in figure 2;

FIG. 4a is partial cross-sectional side view of an exhaust pipe according to prior art, and where;

FIG. 4b is partial cross-sectional side view of an exhaust pipe according to one embodiment of the invention.

EMBODIMENT OF THE INVENTION

In the description below same reference numbers in different drawings refer to the same feature. The drawings are not made to scale.

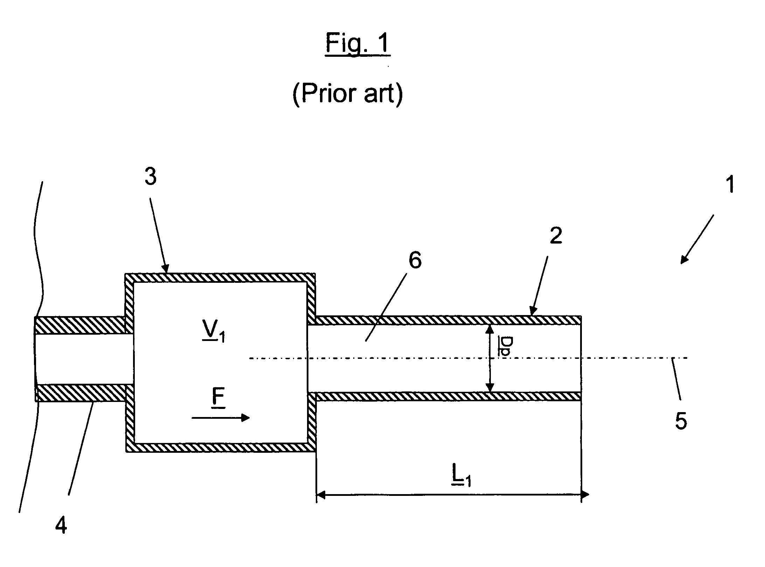

FIG. 1 is a partial cross-sectional side view of an exhaust system 1 according to prior art. The exhaust system comprises a tail pipe connected to a resonance box 3 connected to an internal combustion engine (not shown) via an exhaust pipe 4.

Figure 1 shows that the tail pipe 2 has a central axis 5 extending in a flow direction which coincides with the longitudinal extension of the tail pipe 2. The tail pipe has a first length $L_1$. The flow direction is shown in figure 1 with an arrow F. The tail pipe comprises a conduit 6 arranged to guide exhaust gases from the engine and to expel them to the surrounding atmosphere. The conduit 6 has a cylindrical geometry with a diameter $D_p$. In another embodiment the conduit may have a different cross-section than circular, for example oval or square.

Figure 1 shows that the resonance box 3 comprises a first volume $V_1$ arranged in fluid communication with the conduit 6. The resonance box 3 and the tail pipe 2 together form a mass-spring system, where the first volume together with the first length $L_1$ of the tail pipe and the cross-section area $A_1$ of the tail pipe 2 create a Helmholtz resonator. The Helmholtz resonator is modelled after the following equation:

$$f_1 = \frac{\eta \times C}{2 \times \pi} \sqrt{\frac{A_1}{V_1 \times L_1}} \qquad \text{equation 1}$$

where;

$f_1$ = resonance frequency (Hz)

$\eta$ = Correction factor

$C$ = speed of sound (m/s)

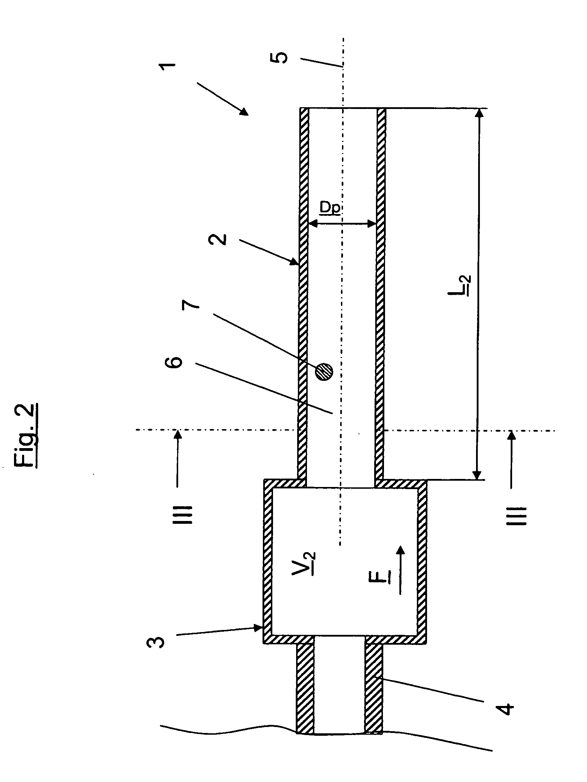

FIG. 2 is a partial cross-sectional side view of a first exhaust system according to one embodiment of the invention. In figure 2 the resonance box 3 has a second volume $V_2$ and the tail pipe 2 has a second length $L_2$ but the same cross-sectional area $A_1$.

In figure 2 the tail pipe 2 is longer than the tail pipe in figure 1, i.e. $L_2$ is greater than $L_1$. Furthermore, the resonance box 3 in figure 2 is smaller than the resonance box 3 in figure 1, i.e. $V_2$ is lesser than $V_1$. The system according to figure 1 and figure 2 are tuned in dependence on the Helmholtz frequency according to equation 1. The longer the tail pipe 2 is the smaller the smaller the resonance box 3 needs to be in order to compensate for the tail pipe length for a given frequency.

For the system in figure 2 the following equation is valid:

$$f_2 = \frac{\eta \times C}{2 \times \pi} \sqrt{\frac{A_1}{V_2 \times L_2}} \qquad \text{equation 2}$$

Equation 1 and equation 2 gives that if $f_1 = f_2$ and $A_1 = A_2$ then $V_2 \times L_2 \approx V_1 \times L_1$.

The longer tail pipe 2 in figure 2 yields the previously discussed problem with standing waves. In order to eliminate the problem with standing waves an obstruction device 7 has been mounted in the tail pipe 2. In figure 2 the obstruction device 7 is a rod-like pin mounted in a cross-flow direction in the conduit 6. The obstruction device may advantageously be welded to the inner wall of tail pipe. The obstruction device 6 is mounted in the conduit 6 such the exhaust gases may flow around the obstruction device, i.e. on either side of the obstruction device 7.

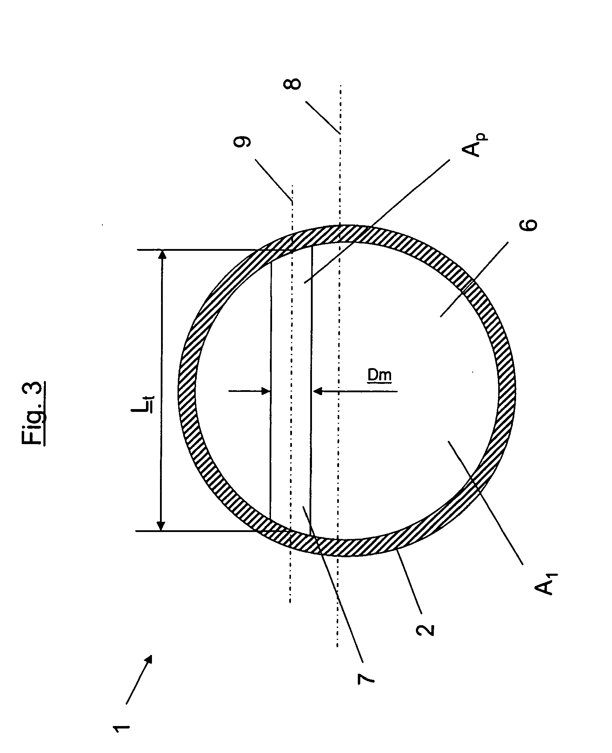

FIG. 3 is a partial cross-sectional view taken along III-III in figure 2. Figure 3 shows that the obstruction device 7 has an average length $L_t$ and a diameter $D_m$. Since the conduit 6 has a circular cross-section the end portions of the obstruction device 7 follow the curvature of the wall of the conduit 6 where the obstruction device is attached to the tail pipe. Figure 3 shows that the obstruction device 7 has a projected area $A_p$ projected on the two dimensional cross-sectional area of the conduit. The average length $L_t$ is an approximation of the length in view of the projected area, where the projected end portions are approximated as being triangular sections. In figure 3 the projected area is equal to the diameter $D_m$ of the rod-like pin multiplied with the average length $L_t$ .

Figure 3 shows a first centre line 8 extending essentially perpendicular to the central axis 5 of the conduit 6 in figure 2. Furthermore, the obstruction device 7 has a second centre axis 9 essentially parallel to the first centre line 8. In figure 3 the obstruction device 7 is placed in the conduit such that the second centre line 9 is at a distance from the first centre line 8. The position of the obstruction device 7 may in another embodiment be such that the first and second centre lines 8, 9 coincide.

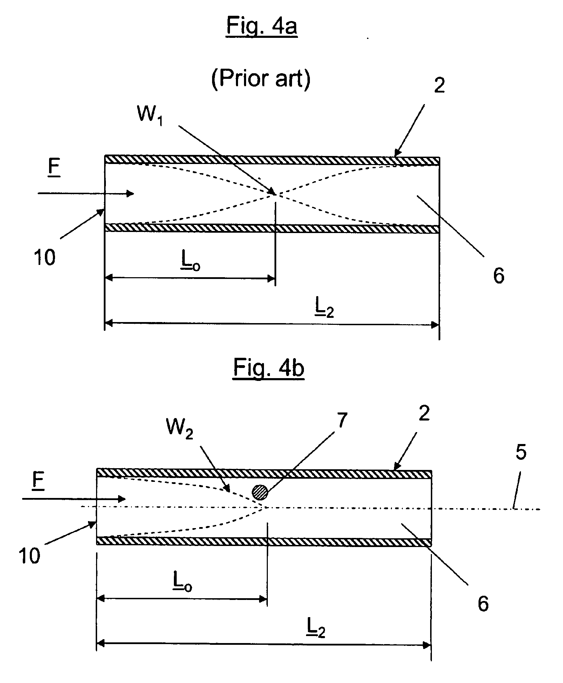

FIG. 4a is a partial cross-sectional side view of an exhaust pipe according to prior art. The tail pipe 2 has the same length $L_2$ as in figure 2 but the obstruction device 7 in figure 2 is lacking. Figure 4a schematically shows a first standing wave $W_1$ having a first wavelength $\lambda_1$ .

The relationship between the frequency f and wavelength $\lambda$ is:

$$f = \frac{C}{\lambda} \qquad \text{equation 3}$$

The tail pipe 2 according to figure 4a is an open pipe where the standing wave frequency is calculated by:

$$f_o = \frac{n \times C}{2 \times L_o}, \text{ where n = 1,2,3...} \qquad \text{equation 4}$$

In figure 4a the first wave $W_1$ is the standing wave occurring for n = 1. Here, the first standing wave has a node at a distance $L_o$ from the upstream flow opening 10.

Fig. 4b is partial cross-sectional side view of an exhaust pipe according to one embodiment of the invention. In figure 4b the inventive obstruction device 4 is placed in the conduit 6 at a position coinciding with $L_o$ in figure 4a. The obstruction device 6 gives the desired feature of a closed pipe with regard to the standing waves.

Figure 4b schematically shows a second standing wave $W_2$ having a second wavelength $\lambda_2$.

The standing wave frequency for a closed pipe is calculated by:

$$f_c = \frac{(2n-1) \times C}{4 \times L_o}, \text{ where n = 1,2,3...} \qquad \text{equation 5}$$

In figure 4b the second wave $W_2$ is the standing wave occurring for n = 1. As is obvious from equation 5 and equation 4, the resonance frequency $f_c$ for n=1 for the closed pipe is two times lower than the resonance frequency $f_o$ for n=1 for the open pipe. The standing wave frequency has thus been shifted out of range for the exhaust pipe system.

Equation 3 and 4 is used for calculating the wavelength for first standing wave (n=1) for a given pipe length. When the wavelength is known the position of the nodes and the anti nodes are known, i.e. it becomes obvious where the obstruction device should 7 be placed in order to shift the open pipe frequency $f_o$ to the two times lower closed pipe frequency $f_c$.

**Claims**

1.  A muffler device for installation within an exhaust pipe (2) connected to an engine, said exhaust pipe (2) having a cross-sectional inner area ($A_1$), the muffler device is arranged to shift a resonance frequency carried by engine exhaust gases passing through said exhaust pipe (2) in a flow direction, said muffler device comprising an obstruction device (7) placed within the exhaust pipe (2), **characterized in that**, said obstruction device (7) comprises a rod-like element mounted in a cross-flow manner in the exhaust pipe (2) and said obstruction device (7) having a projected area (Ap) in relation to the inner area ($A_1$) such that the standing wave frequency for an open pipe is shifted into a standing wave frequency for a closed pipe.

2.  A muffler device according to claim 1, **characterized in that** the obstruction device (7) is arranged such that the exhaust gases may pass on two sides of the obstruction device (7).

3.  A muffler device according to any one of the preceding claims, **characterized in that** the obstruction device (7) has a projected area (Ap) being at least 35 % of the inner area ($A_1$).

4.  A muffler device according to claim 3, **characterized in that** the obstruction device (7) has a projected area (Ap) from 35% to 50% of the inner area ($A_1$), preferably between 35% and 40%.

5.  A muffler device according to any one of the preceding claims, **characterized in that** the obstruction device (7) is placed at a location being a node or an anti-node.

**Patentansprüche**

1.  Schalldämpfervorrichtung zur Installation in einem Auspuffrohr (2), welches mit einem Motor verbunden ist, wobei das Auspuffrohr (2) eine innere Querschnittsfläche ($A_1$) aufweist, die Schalldämpfervorrichtung vorgesehen ist, um eine Resonanzfrequenz von Motorabgasen, welche das Auspuffrohr (2) in Flussrichtung durchlaufen, zu verschieben, und die Schalldämpfervorrichtung eine Hinderniseinrichtung (7) aufweist, welche innerhalb des Auspuffrohrs (2) angeordnet ist, **dadurch gekennzeichnet, dass** die Hinderniseinrichtung (7) ein stab-ähnliches Element aufweist, welches quer zur Flussrichtung in dem Auspuffrohr (2) angeordnet ist, und die Hinderniseinrichtung (7) in Bezug auf die innere Fläche ($A_1$) eine projizierte Fläche (Ap) aufweist, so dass die Stehwellenfrequenz für ein offenes Rohr in eine Stehwellenfrequenz für ein geschlossenes Rohr verschoben wird.

2.  Schalldämpfervorrichtung nach Anspruch 1, **dadurch gekennzeichnet, dass** die Hinderniseinrichtung (7) so angeordnet ist, dass die Abgase an zwei Seiten der Hinderniseinrichtung (7) vorbeifließen können.

3.  Schalldämpfervorrichtung nach einem der vorhergehenden Ansprüche, **dadurch gekennzeichnet, dass** die Hinderniseinrichtung (7) eine projizierte Fläche (Ap) aufweist, die wenigstens 35% der inneren Fläche ($A_1$) beträgt.

4.  Schalldämpfervorrichtung nach Anspruch 3, **dadurch gekennzeichnet, dass** die Hinderniseinrichtung (7) eine projizierte Fläche (Ap) von 35% bis 50%, vorzugsweise zwischen 35% und 40%, der inneren Fläche ($A_1$) aufweist.

5.  Schalldämpfervorrichtung nach einem der vorhergehenden Ansprüche, **dadurch gekennzeichnet, dass** die Hinderniseinrichtung (7) an einer Stelle angeordnet ist, die ein Schwingungsknoten oder ein Schwingungsbauch ist.

**Revendications**

1.  Dispositif formant silencieux pour installation dans un tuyau d'échappement (2) connecté à un moteur, ledit tuyau d'échappement (2) ayant une aire de coupe transversale intérieure ($A_1$), le dispositif formant silencieux étant agencé de manière à déplacer une fréquence de résonance transportée par les gaz d'échappement de moteur traversant ledit tuyau d'échappement (2) dans une direction d'écoulement, ledit dispositif formant silencieux comportant un dispositif d'obstruction (7) placé à l'intérieur du tuyau d'échappement (2), **caractérisé en ce que** ledit dispositif d'obstruction (7) comporte un élément analogue à une tige monté transversalement à l'écoulement dans le tuyau d'échappement (2), et ledit dispositif d'obstruction (7) ayant une aire projetée (Ap) par rapport à la zone intérieure ($A_1$) telle que la fréquence d'onde stationnaire pour un tuyau ouvert est déplacée vers une fréquence d'onde stationnaire pour un tuyau fermé.

2.  Dispositif formant silencieux selon la revendication 1, **caractérisé en ce que** le dispositif d'obstruction (7) est agencé de telle sorte que les gaz d'échappement peuvent passer des deux côtés du dispositif d'obstruction (7).

3.  Dispositif formant silencieux selon la revendication 1 ou 2, **caractérisé en ce que** le dispositif d'obstruction (7) a une aire projetée (Ap) représentant au moins 35 % de la zone intérieure ($A_1$).

4.  Dispositif formant silencieux selon la revendication 3, **caractérisé en ce que** le dispositif d'obstruction (7) a une aire projetée (Ap) sur 35 % à 50 % de la zone intérieure ($A_1$), de préférence entre 35 % et 40 %.

5.  Dispositif formant silencieux selon l'une quelconque des revendications précédentes, **caractérisé en ce que** le dispositif d'obstruction (7) est placé à un emplacement qui est un noeud ou un antinoeud.

Fig. 1

(Prior art)

EP 1 612 384 B1

Fig. 2

EP 1 612 384 B1

## Fig. 3

EP 1 612 384 B1

EP 1 612 384 B1

## Fig. 4a

(Prior art)

## Fig. 4b